# EUROPÄISCHE PATENTSCHRIFT

(11) **EP 2 321 157 B1**
(45) Veröffentlichungstag und Bekanntmachung des Hinweises auf die Patenterteilung: **31.05.2017**
(21) Anmeldenummer: 09778512.5
(22) Anmeldetag: 14.09.2009
(51) Int. Cl.: B60S 1/04, B60S 1/34

(54) **WISCHANLAGE FÜR FAHRZEUGSCHEIBEN**
WIPERSYSTEM FOR VEHICLE WINDSHIELDS
SYSTEME D'ESSUIE GLACE DE VEHICULES

(30) Priorität: 13.09.2008 DE 102008047031
(43) Veröffentlichungstag der Anmeldung: 18.05.2011
(73) Patentinhaber: Valeo Wischersysteme GmbH, 74321 Bietigheim-Bissingen (DE)
(72) Erfinder: SCHOLL, Wolfgang, 74376 Gemmrichheim (DE); WAIBLE, Siegfried, 74223 Flein (DE)
(74) Vertreter: Léveillé, Christophe
(86) Internationale Anmeldenummer: PCT/EP2009/006640
(87) Internationale Veröffentlichungsnummer: WO 2010/028855

(56) Entgegenhaltungen:
- EP-A1- 1 103 434
- EP-A2- 1 083 101
- WO-A1-2005/075265
- WO-A1-2008/028685
- DE-A1- 19 851 881
- DE-A1-102005 039 110
- US-B1- 6 237 185

## Beschreibung

Die Erfindung bezieht sich auf eine Wischanlage für Fahrzeugscheiben, insbesondere Fahrzeugfrontscheiben gemäß Oberbegriff Patentanspruch 1.

Die bei Straßenfahrzeugen bzw. bei deren Wischanlagen in der Regel über die Außenkontur der Fahrzeugkarosserie vorstehenden Wischwellen und die an diesen vorgesehenen Elemente einer Wischanlage, wie Wischarme oder Lagerteile solcher Wischarme usw., stellen bei Unfällen insbesondere auch bei Personenunfällen, z.B. mit Fußgängern und/oder Zweiradfahrern eine erhebliche Gefahrenquelle für Verletzungen dar.

Um das Verletzungsrisiko zu minimieren, ist bekannt, Wischanlagen für Fahrzeuge grundsätzlich so auszubilden, dass bei einer einen bestimmten Schwellwert oder eine bestimmte Auslösekraft übersteigenden Krafteinwirkung, insbesondere in einer Achsrichtung parallel oder annähernd parallel zur Wischwellenachse die betreffende Wischwelle in die Fahrzeugkarosserie "abtaucht", d.h. axial in die Fahrzeugkarosserie ausweicht. Diese Ausweichbewegung kann beispielsweise u.a. durch axiales Verschieben der Wischwelle in ihrem Wischwellenlager realisiert werden. Im Normalzustand, d.h. für den normalen Wischbetrieb ist die Wischwelle dann durch ein axiales Sicherungselement gegen axiales Verschieben gesichert.

Aus der US 6,237,185 B1 ist eine Wischanlage für Fahrzeugscheiben nach dem Oberbegriff des Anspruchs 1 bekannt. Die bekannte Wischanlage weist im Bereich der aus der Karosserie herausragenden Wischerwelle ein Abdeckelement auf, das zum Schutz der Wischerwelle bzw. zum Vermeiden von Eintritt von Schmutz oder Feuchtigkeit in den Bereich der Wischerwelle ausgebildet ist. Darüber hinaus ist innerhalb des Abdeckelements ein axiales Sicherungselement in Form einer Sicherungsscheibe angeordnet, die bei montierter Wischerwelle in eine radial umlaufende Ringnut der Wischerwelle eingreift. Bei einer über einen bestimmten Wert hinausgehenden Axialbelastung der Wischerwelle in Richtung der Karosserie ist es vorgesehen, dass das Axialsicherungselement zerbricht, um ein Eintauchen der Wischerwelle in Richtung der Karosserie des Fahrzeugs zu ermöglichen. Dadurch, dass das axiale Sicherungselement und das Abdeckelement als voneinander getrennte, separate Bauteile ausgebildet sind, ist ein relativ aufwändiger Aufbau bzw. eine relativ aufwändige Montage erforderlich.

Ein weiteres Axial-Sicherungselement, das in Form eines in einer Ringnut der Wischwelle aufgenommenen Federrings ausgebildet ist, der sich mit einem aus der Ringnut vorstehenden Teilbereich zur axialen Sicherung der Wischwelle an einer Fläche des Wischwellenlagers abstützt, ist aus der DE 198 51 881 A1 bekannt. Die Ringnut ist an ihrer dem Wischwellenlager abgewandten Seite leicht abgeschrägt, so dass bei einer eine Auslösekraft übersteigenden Krafteinwirkung auf die Wischwelle der Federring unter Aufweiten an der angeschrägten Seite der Ringnut aus dieser herausbewegt wird, so dass die axiale Sicherung durch den Federring aufgehoben wird und dadurch die axiale Ausweichbewegung der Wischwelle möglich ist. Grundsätzliche Probleme bestehen hier u.a. bezüglich einer reproduzierbaren Einstellung der Auslösekraft. weiterhin sind eine Vielzahl von Einzelteilen und deren Montage erforderlich.

Bekannt ist weiterhin auch, an Wischwellenlagern zur Abdeckung des im montierten Zustand der Wischanlage an der Fahrzeugaußenseite angeordneten Übergangs zwischen der Wischwelle und dem Wischwellenlagergehäuse eine Schutztülle oder Abdeckkappe aus Metallblech (WO 2005/075265 A1) oder ein Abdeckelement aus Kunststoff vorzusehen (DE 10 2006 027 345 A1). Die Abdeckkappe aus Metallblech oder das Abdeckelement aus Kunststoff vorzusehen dienen jeweils zugleich als Axial-Sicherungselement für die Wischwelle und greifen hierfür mit einer in das Metallblech eingeformten Sicke oder mit einem angeformten Ringwulst in eine Ringnut der Wischwelle, und zwar derart, dass bei einer eine Auslösekraft übersteigenden äußeren Krafteinwirkung auf die Wischwelle die axiale Sicherung durch Herausbewegen der Sicke oder des Ringwulstes aus der Ringnut aufgehoben wird, und zwar unter Verformen der Abdeckkappe oder des Abdeckelementes, so dass eine Ausweichbewegung der Wischwelle möglich ist. Grundsätzliche Probleme bestehen auch hier bezüglich einer reproduzierbaren Einstellung der Auslösekraft.

Aufgabe der Erfindung ist es, eine Wischanlage nach dem Oberbegriff des Anspruchs 1 derart weiterzubilden, dass bei einer preiswerten Herstellung und einfachen Montage die jeweilige Auslösekraft reproduzierbar sehr genau einstellbar ist. Zur Lösung dieser Aufgabe ist eine Wischanlage entsprechend dem Patentanspruch 1 ausgebildet. Dabei ist es erfindungsgemäß vorgesehen, dass die Abdeckkappe, die den Übergang zwischen der Wischwelle und dem Wischwellenlagerelement an der Fahrzeugaußenseite abdeckt, zugleich das Axial-Sicherungselementes mit dem wenigstens einen angeformten abscherbaren Materialabschnitt darstellt, wodurch die Anzahl der zu montierenden Einzelteile der Wischwellenlager erheblich reduziert wird. Durch die Wahl des Materials für das Axial-Sicherungselement bzw. die Abdeckkappe und damit für den abscherbaren Materialabschnitt sowie durch die Abmessungen und/oder durch den Querschnitt des abscherbaren Abschnitts kann die Auslösekraft reproduzierbar und dauerhaft sehr genau auf den jeweils gewünschten Wert eingestellt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: in vereinfachter Darstellung die an einer Fahrzeugkarosserie zu montierende Motor- oder Wischerplatine (Rohrplatine) einer Scheibenwischanlage;
- Fig. 2 und 3: in Einzeldarstellungen eines der beiden Wischwellenlager der Platine der Figur 1 zusammen mit der Wischwelle und mit dem an der Wischwelle vorgesehenen Antriebselement bzw. Kurbelarm des Scheibenwischerantriebs, und zwar im Normalzustand (Figur 2) sowie bei axial in eine Ausweichposition verschobener Wischwelle (Figur 3);
- Fig. 4: in vergrößerter Teildarstellung das Wischwellenlager im Normalzustand;
- Fig. 5: eine Darstellung wie Figur 4, jedoch bei einer weiteren Ausführungsform der Erfindung.

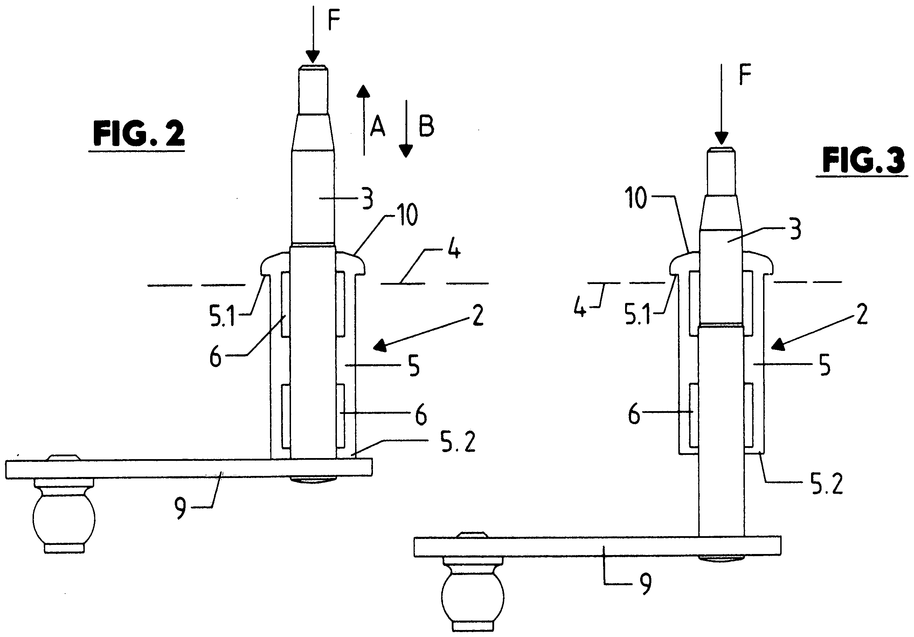

In den Figuren ist 1 die als Rohrplatine ausgeführte Wischmotor- oder Wischerplatine einer Scheibenwischanlage für Fahrzeuge, insbesondere Straßenfahrzeuge. Die Platine 1 besteht im Wesentlichen aus einem rohrartigen Träger 1.1, der beidendig jeweils mit einem Wischwellenlager 2 versehen ist und zwar zur dreh- oder schwenkbaren Lagerung einer Wischwelle 3, die nach der Montage der Scheibenwischanlage bzw. der Platine 1 in einem Fahrzeug mit einer Länge, die das sich verjüngenden Wischwellenende 3.1 aufweist, über die in der Figur 2 mit der unterbrochenen Linie 4 angedeutete Außenkontur des Fahrzeugs bzw. der Fahrzeugkarosserie vorsteht, und zwar zur Befestigung eines nicht dargestellten Wischarmes an dem Wischwellenende 3.1.

Das jeweilige Wischwellenlager 2 besteht im Wesentlichen aus einem Wischwellenlagergehäuse 5, welches beispielsweise aus einem metallischen Werkstoff hergestellt ist und in welchem zwei in Achsrichtung der Wischwelle 3 gegeneinander versetzte Lagerbuchsen 6 zur Lagerung der Wischwelle 3 vorgesehen sind. Das Wischwellengehäuse 5, welches im montierten Zustand mit einem Gehäuseende 5.1 über die Außenkontur 4 des Fahrzeugs bzw. der Fahrzeugkarosserie nach außen vorsteht, ist jeweils an einem Ende des Trägers 1.1 der Platine 1 befestigt, und zwar beispielsweise mit einem angeformten Zapfen. Mit nicht dargestellten Mitteln ist die Platine 1 an der Innenseite der Fahrzeugkarosserie befestigbar.

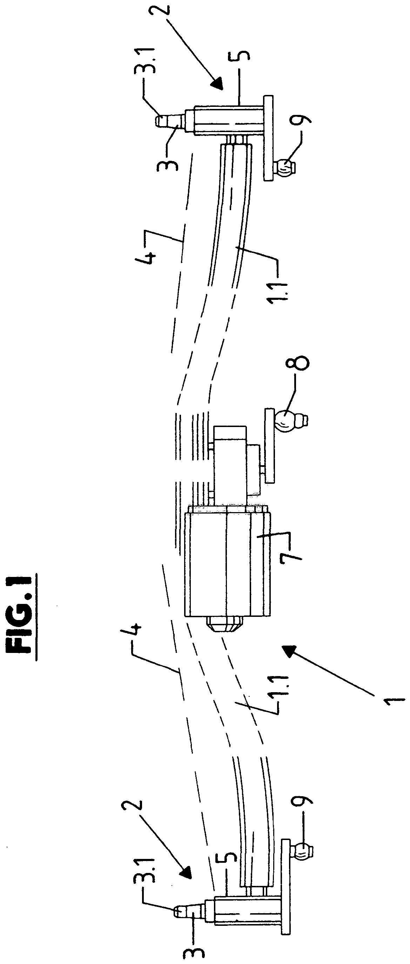

Über einen Kurbelantrieb, von dem in der Figur 1 nur der an der Ausgangswelle eines elektromotorischen Antriebs 7 vorgesehene Kurbelarm 8 sowie die jeweils an den Wischwellen 3 vorgesehenen Kurbelarme 9 dargestellt sind, sind die Wischwellen 3 in der dem Fachmann bekannten Weise um ihre Achsen schwenkbar antreibbar. Bei der dargestellten Ausführungsform befinden sich die Kurbelarme 9 jeweils an den dem Wischwellenende 3.1 abgewandten und aus dem Gehäuseende 5.2 des Wischwellenlagergehäuses 5 herausgeführten Wellenende 3.2.

Wie die Figuren zeigen, ist an dem der Fahrzeugaußenseite zugeordneten Gehäuseende 5.1 jedes Wischwellenlagers 5 auf der zugehörigen Wischwelle 3 eine Abdeckkappe 10 vorgesehen, die mit ihrem Randbereich das Gehäuseende 5.1 des zumindest dort an der Außenfläche kreiszylinderförmig ausgebildeten Wischwellenlagergehäuse 5 überlappt bzw. übergreift und als Formteil aus einem geeigneten Kunststoff gefertigt ist. Hierdurch ist allein schon durch die Abdeckkappe 10, zusätzlich aber auch durch einen die Wischwelle 3 umschließenden und unterhalb der Abdeckkappe 10 angeordneten Dichtungsring 11 das jeweilige Wischwellenlager 2 gegen Eindringen von Feuchtigkeit, Wasser, Schmutz usw. geschützt. Der Dichtungsring 11 ist dabei in einem Raum aufgenommen, der radial von der Außenfläche der Wischwelle 3 und der Innenfläche des Wischwellengehäuses 5 sowie axial durch eine der beiden Lagerbuchsen 6 sowie durch die Unter- oder Innenseite des Bodens 10.2 der Abdeckkappe 10 begrenzt ist. Mit der Innenseite des Bodens 10.2 bzw. mit einem dortigen, beispielsweise durch Anformen an der Abdeckkappe 10 gehaltenen und die Wischwelle 3 konzentrisch umschließenden Ring 12 aus einem verschleißfesten Material, beispielsweise aus einem verschleißfesten Kunststoff oder Metall, stützt sich die Abdeckkappe 10 axial an der außen liegenden Stirnfläche des Wischwellenlagergehäuses 5 bzw. des Gehäuseendes 5.1 ab.

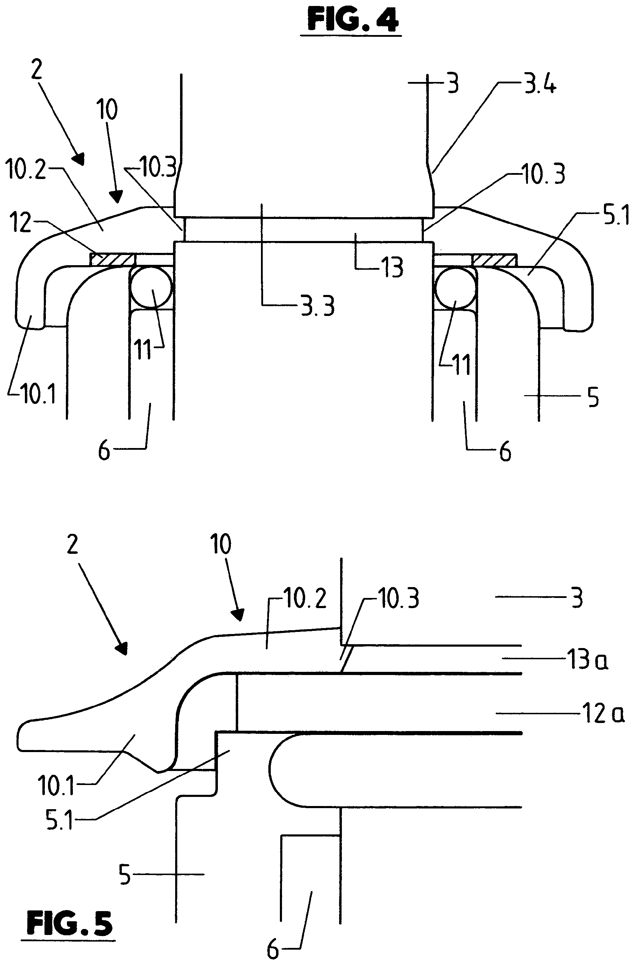

Im Bereich der Abdeckkappe 10 ist die Wischwelle 3 an ihrem aus dem Wischwellenlagergehäuse 5 vorstehenden Wellenbereich 3.3 mit einer die Achse der Wischwelle 3 ringförmig umschließenden und radial nach außen hin offenen Ringnut 13 versehen, in die ein ringförmige Materialabschnitt 10.3 der Abdeckkappe 10 hineinreicht und die einen axialen Hinterschnitt für diesen Materialabschnitt 10.3 bildet. Wie insbesondere die Figur 4 zeigt, ist die Wischwelle 3 weiterhin so ausgeführt, dass sie an den Wellenbereich 3.3 anschließend bei 3.4 einen reduzierten Außendurchmesser aufweist.

Während die Wischwelle 3 beispielsweise durch die sich am Gehäuseendes 5.2 abstützende Kurbel 9 gegen ein axiales Verschieben in Richtung des Pfeils A, d.h. bei montierter Scheibenwischanlage zur Außenseite der Fahrzeugkarosserie hin gesichert ist, dient die Abdeckkappe 10 bei dieser Ausführungsform als Axial-Sicherungselement gegen axiales Verschieben der Wischwelle 3 in Richtung des Pfeils B, d.h. bei montierter Scheibenwischanlage gegen ein axiales Verschieben der Wischwelle 3 in Richtung Fahrzeugkarosserie bzw. gegen ein Abtauchen der Wischwelle 3 in das Fahrzeug, und zwar durch Abstützung am Gehäuseendes 5.1 über den Ring 12.

Durch entsprechende Wahl des Materials für die Abdeckkappe 10, durch entsprechende Ausbildung des ringartigen Materialabschnittes 10.3 und der Ringnut 13 ist erreicht, dass ein Ausweichen oder Abtauchen der Wischwelle 3 unter Abscheren des Materialabschnittes 10.3 beispielsweise bei einem Personenunfall dann erfolgt, wenn eine auf das Wischwellenende 3.1 ausgeübte äußere Krafteinwirkung F eine Auslösekraft übersteigt. Die Auslösekraft, bei der diese Schutzfunktion ausgelöst, d.h. die jeweilige Wischwelle 3 in Richtung des Pfeils B in das Innere des Fahrzeugs vorschoben wird, kann bei dieser Ausführungsform durch die Form und Tiefe der Ringnut 13 sowie durch die Form des ringartigen Vorsprungs 10.3 reproduzierbar und dauerhaft sehr genau eingestellt werden. Durch den sich am Wischwellenbereich 3.4 verjüngenden Außenquerschnitt der Wischwelle 3 ist u.a. sichergestellt, dass nach dem Auslösen der Schutzfunktion sich die Wischwelle 3 unbehindert durch die Abdeckkappe 10 hindurch axial verschieben kann, d.h. die Schutzfunktion nicht etwa durch Reibung zwischen der Abdeckkappe 10 und der Wischwelle 3 verhindert oder beeinträchtigt wird. Um eindeutige und reproduzierbare Verhältnisse für die Auslösekraft bzw. beim Abscheren des Materialabschnitts 10.4 zu erreichen, ist der Übergang zwischen der den Hinterschnitt bildenden Nut 13 und der anschließenden Umfangsfläche der Wischwelle 3 zumindest an der dem Wischwellenende 3.1 zugewandten Seite dieser Nut 13 rechtwinklig und möglichst schafkantig ausgebildet. Der ringförmigen Materialabschnitt 10.3 der Abdeckkappe 10 ist an die bei dieser Ausführungsform rechteckförmige Querschnittsform der Nut 13 so angepasst ist, dass er die Nut 13 vollständig oder im Wesentlichen vollständig ausfüllt.

Die Montage der jeweiligen Wischwelle 3 in dem zugehörigen Wischwellenlager 2 erfolgt z.B. in besonders einfacher Weise dadurch, dass die mit der Kurbel 9 vormontierte Wischwelle 3 mit ihrem Wischwellenende 3.1 voraus in das Wischwellenlagergehäuse 5 bzw. in das dortige, von den Lagerbuchsen 6 gebildete Lager eingeschoben wird, so dass die Kurbel 9 an dem Gehäuseende 5.2 unmittelbar oder über einen Zwischenring anliegt und die Wischwelle 3 mit ihren Wischwellenende 3.1 aus den anderen Gehäuseende 5.1 vorsteht. Im Anschluss daran wird der Dichtungsring 11 auf die Wischwelle 3 aufgeschoben und in das Wischwellenlagergehäuse 5 eingesetzt, so dass er gegen die dortige Lagerbuchse 6 anliegt. In einem weiteren Montageschritt wird die Abdeckkappe 10 auf die Wischwelle 3 aufgesetzt und unter leichter elastischer Verformung am kegelförmigen Wischwellenbereich 3.3 durch Verrasten an der Ringnut 13 befestigt.

Grundsätzlich besteht auch die Möglichkeit, die Abdeckkappe 10 an der Wischwelle 3 vorzumontieren oder an der Wischwelle 3 anzuspritzen und die Wischwelle 3 dann mit ihren Wischwellenende 3.2 voraus in das Wischwellenlagergehäuse 5 einzusetzen und anschließend die Kurbel 9 an dem aus dem Wischwellenlagergehäuse herausgeführten Wischwellenende 3.2 zu montieren.

Die Figur 5 zeigt in einer Darstellung wie Figur 4 eine weitere Ausführungsform, die sich von der Ausführungsform der Figur 4 lediglich dadurch unterscheidet, dass anstelle des Rings 12 ein Ring 12a vergrößerte Dicke zwischen der Abdeckkappe 10 und dem Gehäuseende 5.1 vorgesehen ist und die der Nut 13 entsprechende, den Hinterschnitt bildenden Ringnut 13a einen dreieckförmigen Nutenquerschnitt aufweist, und zwar derart, dass die Nut 13a an ihrer dem Wischwellenende 3.1 abgewandten Seite abgeschrägt und der ringförmige abscherbare Materialabschnitt 10.3 der Abdeckkappe 10 an diese Nutenform so angepasst ist, dass er wiederum die Nut 13a vollständig oder im Wesentlichen vollständig ausfüllt. An der dem Wischwellenende 3.1 zugewandten Seite ist der Übergang zwischen der Nut 13a und der anschließenden Umfangsfläche der Wischwelle 3 wiederum rechtwinklig und möglichst schafkantig ausgebildet.

Die Erfindung wurde voranstehend an Ausführungsbeispielen beschrieben. Es verseht sich, dass Änderungen sowie Abwandlungen möglich sind, ohne dass dadurch der der Erfindung zugrundeliegende Erfindungsgedanke verlassen wird.

### Bezugszeichenliste

- 1: Platine
- 1.1: Träger
- 2: Wischwellenlager
- 3: Wischwelle
- 3.1,3.2: Wischwellenende
- 3.3,3.4: Wischwellenabschnitt
- 4: Fahrzeugaußenkontur
- 5: Wischwellenlagergehäuse
- 5.1,5.2: Gehäuseende
- 6: Lagerbuchse
- 7: elektromotorischer Antrieb bzw. Getriebemotor
- 8,9: Kurbel
- 10: Abdeckkappe
- 10.1: Rand der Abdeckkappe 10
- 10.2: Boden der Abdeckkappe 10
- 10.3: angeformter ringförmiger Abschnitt der Abdeckkappe 10
- 11: Dichtungsring
- 12, 12a: Abstützring
- 13, 13a: Ringnut

- A, B: Achsrichtung
- F: äußere Krafteinwirkung

## Patentansprüche

1. Wischanlage für Fahrzeugscheiben, insbesondere für Fahrzeugfrontscheiben, mit mindestens einer in einem Wischwellenlagergehäuse (5) eines Wischwellenlagers (2) gelagerten und durch einen Wischerantrieb antreibbaren Wischwelle (3), die mit einem ersten, zur Befestigung eines Wischarmes dienenden Wischwellenende (3.1) aus einer ersten Gehäuseseite (5.1) des Wischwellenlagergehäuses (5) axial vorsteht, mit einem den Übergang zwischen Wischwelle (3) und dem Wischwellenlagergehäuse (5) an der ersten Gehäuseseite (5.1) abdeckenden und auf der Wischwelle (3) vorgesehenen Abdeckelement (10) sowie mit wenigstens einem Axial-Sicherungselement zur Sicherung der Wischwelle (3) gegen axiales Verschieben in Form einer Ausweich- oder Abtauchbewegung, bei der sich das erste Wischwellenende (3.1) axial in Richtung des Wischwellenlagergehäuses (5) und/oder in dieses hinein bewegt, wobei die Wirkung des Axial-Sicherungselementes bei einer eine Auslösekraft übersteigenden äußeren Krafteinwirkung (F) auf die Wischwelle (3) aufgehoben wird, wobei sich das Axial-Sicherungselement einerseits an dem Wischwellenlagergehäuse (5) abstützt und andererseits mit einem Materialabschnitt (10.3) einen Hinterschnitt (13, 13a) an der Wischwelle (3) hintergreifend axial an der Wischwelle (3) abstützt, und wobei der Materialabschnitt (10.3) des Axial-Sicherungselementes bei einer die Auslösekraft übersteigenden äußeren Krafteinwirkung (F) zur Freigabe der Ausweich- oder Abtauchbewegung abscherbar ist,
**dadurch gekennzeichnet,**
**dass** das Axial-Sicherungselement von dem Abdeckelement (10) gebildet ist

2. Wischanlage nach Anspruch 1, **dadurch gekennzeichnet, dass** der wenigstens eine abscherbare Materialabschnitt (10.3) eine die Achse der Wischwelle (3) umschließender ringförmiger Abschnitt (10.3) ist.

3. Wischanlage nach Anspruch 1 oder 2, **dadurch gekennzeichnet, dass** der Hinterschnitt von einer Seitenfläche einer an der Wischwelle (3) vorgesehenen und deren Achse konzentrisch umschließenden Ringnut (13, 13a) gebildet ist.

4. Wischanlage nach einem der Ansprüche 1 bis 3, **dadurch gekennzeichnet, dass** der Hinterschnitt (13, 13a) eine axiale Anlagefläche für den abscherbaren Materialabschnitt 10.3 bildet, an sich die Außenfläche der Wischwelle (3) scharfkantig oder rechtwinklig anschließt.

5. Wischanlage nach einem der Ansprüche 1 bis 4, **dadurch gekennzeichnet, dass** sich an den Hinterschnitt (13, 13a) oder an einen diesen Hinterschnitt (13, 13a) aufweisenden Wischwellenabschnitt (3.3) ein sich entgegen der Richtung der Ausweich- oder Abtauchbewegung verjüngender Wischwellenabschnitt (3.4) anschließt.

6. Wischanlage nach einem der Ansprüche 1 bis 5, **dadurch gekennzeichnet, dass** das Abdeckelement (10) ein Formteil aus Kunststoff ist.

7. Wischanlage nach einem der vorhergehenden Ansprüche 1 bis 6, **dadurch gekennzeichnet, dass** zwischen dem Abdeckelement (10) und dem Wischwellenlagerelement (5) ein die Achse der Wischwelle (3) konzentrisch umschließender Ring (12a) aus einem Werkstoff mit erhöhter Festigkeit, beispielsweise aus einem metallischen Werkstoff vorgesehen ist.

8. Wischanlage nach einem der Ansprüche 1 bis 7, **dadurch gekennzeichnet, dass** das Abdeckelement (10) an einem für die axiale Abstützung mit dem Wischwellenlagerelement (5) zusammenwirkenden Bereich (12) aus einem Werkstoff mit erhöhter Festigkeit, beispielsweise aus einem metallischen Werkstoff besteht.

9. Wischanlage nach Anspruch 8, **dadurch gekennzeichnet, dass** der mit dem Wischwellenlagerelement (5) zusammenwirkende Bereich von einem die Achse der Wischwelle (3) konzentrisch umschließenden Ring (12) an dem Abdeckelement (10) gebildet ist.

10. Wischanlage nach einem der vorhergehenden Ansprüche 1 bis 9, **dadurch gekennzeichnet, dass** das Abdeckelement als Abdeckkappe (10) mit einem das Wischwellenlagergehäuse (5) an der ersten Seite übergreifenden Rand (10.1) sowie mit einem Kappenboden (10.2) ausgebildet ist, durch den die Wischwelle (3) hindurchreicht und an dem der wenigstens eine den Hinterschnitt (13, 13a) an der Wischwelle (3) hintergreifende abscherbare Materialabschnitt (10.3) ausgebildet ist.

11. Wischanlage nach einem der Ansprüche 1 bis 10, **gekennzeichnet durch** wenigstens eine ringförmige Dichtung (11), die in einem zwischen der Wischwelle (3) und der Innenfläche des Wischwellenlagergehäuses (5) gebildeten Ringraum aufgenommen ist, der axial **durch** das Abdeckelement (10) sowie gegenüberliegend **durch** ein im Wischwellenlagergehäuse (5) untergebrachtes Lagerelement, beispielsweise **durch** eine Lagerbuchse (6) begrenzt ist.

## Claims

1. Wiper module for vehicle windscreens, particularly for vehicle front windscreens, having at least one wiper shaft (3), mounted in a wiper shaft bearing housing (5) of a wiper shaft bearing (2) and able to be driven by a wiper drive, a first wiper shaft end (3.1) of which, serving to attach a wiper arm, axially projects from a first housing side (5.1) of the wiper shaft bearing housing (5), with a covering element (10) provided on the wiper shaft (3) and covering the transition between the wiper shaft (3) and the wiper shaft bearing housing (5) on the first housing side (5.1) and with at least one axial securing element for securing the wiper shaft (3) against axial displacement in the form of a deflectional or descending movement, during which the first wiper shaft end (3.1) moves axially in the direction of the wiper shaft bearing housing (5) and/or moves into the latter, wherein the effect of the axial securing element is abolished in case of an external effect of force (F) on the wiper shaft (3) exceeding an actuation force, wherein the axial securing element rests on the one hand on the wiper shaft bearing housing (5) and on the other hand axially rests on the wiper shaft (3) engaging with a material section (10.3) behind an undercut (13, 13a) on the wiper shaft (3), and wherein the material section (10.3) of the axial securing element is shearable for release of the deflectional or descending movement in case of an external effect of force (F) exceeding the actuation force, **characterised**
**in that** the axial securing element is formed by the covering element (10).

2. Wiper module according to claim 1, **characterised in that** the at least one shearable material section (10.3) is an annular section (10.3) surrounding the axis of the wiper shaft (3).

3. Wiper module according to claim 1 or 2, **characterised in that** the undercut is formed by a lateral surface of a circumferential slot (13, 13a) provided on the wiper shaft (3) and concentrically surrounding the latter's axis.

4. Wiper module according to any of claims 1 to 3, **characterised in that** the undercut (13, 13a) forms an axial contact surface for the shearable material section 10.3, with which the outer surface of the wiper shaft (3) abuts in a sharp-edged fashion or at a right angle.

5. Wiper module according to any of claims 1 to 4, **characterised in that** a wiper shaft section (3.4) tapering contrary to the direction of the deflectional or descending movement adjoins the undercut (13, 13a) or a wiper shaft section (3.3) presenting this undercut (13, 13a).

6. Wiper module according to any of claims 1 to 5, **characterised in that** the covering element (10) is a plastic moulding.

7. Wiper module according to any of the above claims 1 to 6, **characterised in that** between the covering element (10) and the wiper shaft bearing element (5), a ring (12a) made of increased rigidity material, for example a metallic material, is provided concentrically surrounding the axis of the wiper shaft (3).

8. Wiper module according to any of claims 1 to 7, **characterised in that** the covering element (10) is made of increased rigidity material, for example a metallic material, on an area (12) interacting with the wiper shaft bearing element (5) for the axial support.

9. Wiper module according to claim 8, **characterised in that** the area interacting with the wiper shaft bearing element (5) is formed of a ring (12) concentrically surrounding the axis of the wiper shaft (3) on the covering element (10).

10. Wiper module according to any of the above claims 1 to 9, **characterised in that** the covering element is designed as a cover cap (10) with an edge (10.1) overlapping the wiper shaft bearing housing (5) on the first side and with a cap base (10.2), through which the wiper shaft (3) projects and on which the at least one shearable material section (10.3) engaging behind the undercut (13, 13a) on the wiper shaft (3) is formed.

11. Wiper module according to any of claims 1 to 10, **characterised by** at least one annular seal (11), received in a ring space, formed between the wiper shaft (3) and the internal surface of the wiper shaft bearing housing (5), which ring space is axially delimited by the covering element (10) and oppositely by a bearing element accommodated in the wiper shaft bearing housing (5), for example by a bearing bush (6).

## Revendications

1. Système d'essuie-glace pour vitres de véhicules, en particulier pour pare-brises de véhicules, comprenant au moins un arbre d'essuie-glace (3) supporté dans un boîtier de palier d'arbre d'essuie-glace (5) d'un palier d'arbre d'essuie-glace (2) et pouvant être entraîné par un entraînement d'essuie-glace, qui fait saillie axialement, par une première extrémité d'arbre d'essuie-glace (3.1) servant à la fixation d'un bras d'essuie-glace, hors d'un premier côté de boîtier (5.1) du boîtier de palier d'arbre d'essuie-glace (5), avec un élément de recouvrement (10) recouvrant la transition entre l'arbre d'essuie-glace (3) et le boîtier de palier d'arbre d'essuie-glace (5) au niveau du premier côté de boîtier (5.1) et prévu sur l'arbre d'essuie-glace (3), ainsi qu'avec au moins un élément de fixation axiale pour la fixation de l'arbre d'essuie-glace (3) contre un déplacement axial sous la forme d'un déplacement d'écartement ou d'enfoncement, la première extrémité d'arbre d'essuie-glace (3.1) se déplaçant axialement dans la direction du boîtier de palier d'arbre d'essuie-glace (5) et/ou dans celui-ci, l'action de l'élément de fixation axiale, dans le cas de l'application d'une force extérieure (F) sur l'arbre d'essuie-glace (3) dépassant une force de desserrage, étant supprimé, l'élément de fixation axiale s'appuyant d'une part contre le boîtier de palier d'arbre d'essuie-glace (5) et d'autre part s'appuyant avec une portion de matériau (10.3) en venant en prise par l'arrière avec une contre-dépouille (13, 13a) au niveau de l'arbre d'essuie-glace (3) sur l'arbre d'essuie-glace (3), et la portion de matériau (10.3) de l'élément de fixation axiale, dans le cas de l'application d'une force extérieure (F) dépassant la force de desserrage, pouvant être cisaillée pour libérer le mouvement d'écartement ou d'enfoncement, **caractérisé en ce que**
l'élément de fixation axiale est formé par l'élément de recouvrement (10).

2. Système d'essuie-glace selon la revendication 1, **caractérisé en ce que** l'au moins une portion de matériau (10.3) pouvant être cisaillée est une portion annulaire (10.3) entourant l'axe de l'arbre d'essuie-glace (3).

3. Système d'essuie-glace selon la revendication 1 ou 2, **caractérisé en ce que** la contre-dépouille est formée par une surface latérale d'une rainure annulaire (13, 13a) prévue sur l'arbre d'essuie-glace (3) et entourant concentriquement son axe.

4. Système d'essuie-glace selon l'une quelconque des revendications 1 à 3, **caractérisé en ce que** la contre-dépouille (13, 13a) forme une surface d'appui axiale pour la portion de matériau (10.3) pouvant être cisaillée, à laquelle se raccorde la surface extérieure de l'arbre d'essuie-glace (3) avec une arête vive ou à angle droit.

5. Système d'essuie-glace selon l'une quelconque des revendications 1 à 4, **caractérisé en ce qu'**une portion d'arbre d'essuie-glace (3.4) se rétrécissant dans le sens opposé à la direction du mouvement d'écartement ou d'enfoncement se raccorde à la contre-dépouille (13, 13a) ou à une portion d'arbre d'essuie-glace (3.3) présentant cette contre-dépouille (13, 13a).

6. Système d'essuie-glace selon l'une quelconque des revendications 1 à 5, **caractérisé en ce que** l'élément de recouvrement (10) est une pièce moulée en plastique.

7. Système d'essuie-glace selon l'une quelconque des revendications 1 à 6, **caractérisé en ce qu'**entre l'élément de recouvrement (10) et l'élément de palier d'arbre d'essuie-glace (5) est prévue une bague (12a) entourant l'axe de l'arbre d'essuie-glace (3) de manière concentrique, constituée d'un matériau de grande résistance, par exemple d'un matériau métallique.

8. Système d'essuie-glace selon l'une quelconque des revendications 1 à 7, **caractérisé en ce que** l'élément de recouvrement (10), au niveau d'une région (12) coopérant avec l'élément de palier d'arbre d'essuie-glace (5) pour le support axial, se compose d'un matériau de grande résistance, par exemple d'un matériau métallique.

9. Système d'essuie-glace selon la revendication 8, **caractérisé en ce que** la région coopérant avec l'élément de palier d'arbre d'essuie-glace (5) est formée par une bague (12) sur l'élément de recouvrement (10), entourant concentriquement l'axe de l'arbre d'essuie-glace (3).

10. Système d'essuie-glace selon l'une quelconque des revendications précédentes 1 à 9, **caractérisé en ce que** l'élément de recouvrement est réalisé en tant que couvercle de recouvrement (10), avec un bord (10.1) venant en prise par le dessus avec le boîtier de palier d'arbre d'essuie-glace (5) au niveau du premier côté ainsi qu'avec un fond de couvercle (10.2), à travers lequel s'étend l'arbre d'essuie-glace (3), et au niveau duquel est réalisée l'au moins une portion de matériau pouvant être cisaillée (10.3) venant en prise par l'arrière avec la contre-dépouille (13, 13a) au niveau de l'arbre d'essuie-glace (3).

11. Système d'essuie-glace selon l'une quelconque des revendications 1 à 10, **caractérisé par** au moins un joint d'étanchéité annulaire (11) qui est reçu dans un espace annulaire formé entre l'arbre d'essuie-glace (3) et la surface interne du boîtier de palier d'arbre d'essuie-glace (5), lequel espace annulaire est limité axialement par l'élément de recouvrement (10) ainsi qu'au niveau opposé par un élément de palier monté dans le boîtier de palier d'arbre d'essuie-glace (5), par exemple par une douille-palier (6).
